# EUROPEAN PATENT SPECIFICATION

(11) **EP 2 612 998 B1**
(45) Date of publication and mention of the grant of the patent: **28.04.2021**
(21) Application number: 12197870.4
(22) Date of filing: 18.12.2012
(51) Int. Cl.: F01D 5/30, F01D 9/04

(54) **Stator Vane Integrated Attachment Liner and Spring Damper**
In einer Leitschaufel integrierte Befestigungsauskleidung und Federdämpfer
Garniture de fixation intégrée d'aube de stator et ressort amortisseur

(30) Priority: 05.01.2012 US 201213343784
(43) Date of publication of application: 10.07.2013
(73) Proprietor: Raytheon Technologies Corporation, Farmington, CT 06032 (US)
(72) Inventor: Ring, Mark David, Cape Neddick, ME Maine 03902 (US)
(74) Representative: Dehns

(56) References cited:
- EP-A1- 2 216 511
- EP-A2- 1 008 725
- EP-A2- 1 657 405
- EP-A2- 2 163 734
- DE-A1- 1 551 180
- FR-A1- 2 938 872
- GB-A- 1 141 280
- GB-A- 2 385 643
- GB-A- 2 477 825
- US-A- 5 988 975

## Description

### BACKGROUND

This disclosure relates to a stator assembly for a gas turbine engine. More particularly, the disclosure relates to a damping configuration for stator vanes in the stator assembly.

Typically, gas turbine engines include a stator assembly arranged at one or more stages in the compressor section of the gas turbine engine. The stator assembly includes an array of circumferentially arranged discrete stator segments. The stator segments include an outer shroud that provides opposing hooks supported relative to an outer case. The stator segments move relative to the outer case during engine operation. Some stator assemblies have attachment liners mounted between the hooks and their supporting structure to provide a wearable structure that can be replaced.

One type of stator assembly includes an inner shroud supported at the radial innermost portion of the stator segment. The inner shrouds stabilize the stator assembly and minimize vibration. In one stator assembly configuration, an abradable seal is supported by each inner shroud to seal the compressor rotor relative to the stator assembly. A spring is arranged between the inner shroud and the seal.

Another type of stator assembly includes stator segments without an inner shroud. Individual springs are provided between the outer shroud of each stator segment and the outer case. The springs are configured to bias the stator segments radially inward. No liners may be used.

EP 2163734 A2 discloses a gas turbine vane attachment. The base of the vane is curved to match that of the casing. An interface between the vane base and the casing groove includes a metal alloy liner. The liner protects the casing groove from wear damage, while the hook coating and the liner provide a wear coupling between the vane base and the casing that provides a barrier between the vane bases and the casing to decrease the wear rate.

EP 2216511 A1 discloses an annular vane assembly for a gas turbine engine. The assembly includes a vane segment comprising an arcuate rail formed in an annular groove of a hollow cylindrical casing, and at least one vane that extends radially inwardly from the arcuate rail. The arcuate rail is secured in the annular groove by means of one or more resilient strips interposed between the rail and the groove, the or each resilient strip comprising a planar main body and sprung wings that extend to either side of the main body and angled with respect to the plane of the main body.

### SUMMARY

In accordance with a first aspect, the present invention provides a stator assembly as claimed in claim 1.

In a further embodiment of the foregoing stator assembly embodiment, at least one of the stator vanes may include first and second hooks. The first and second attachment liners may respectively be secured to the first and second hooks to provide the stator vane assembly. The first and second attachment liners may respectively include integral first and second damper springs.

In a further embodiment of the foregoing stator assembly embodiment, at least one of the stator vanes may include a recess having a bottom wall. The first damper spring may engage the bottom wall and may be spaced from the outer case.

In a further embodiment of the foregoing stator assembly embodiment, the first damper spring may include a first leg engaging the bottom wall. A hook at a terminal end of the first leg may be arranged opposite the first attachment liner.

In a further embodiment of the foregoing stator assembly embodiment, at least one of the stators may include an anti-rotation feature. The first leg may be arranged circumferentially adjacent to the anti-rotation feature. The first leg may include a circumferential width that is less than the circumferential width of the first attachment liner.

In a further embodiment of the foregoing stator assembly embodiment, the second damper spring may engage the outer case and may be spaced from a bottom wall of the recess.

In a further embodiment of the foregoing stator assembly embodiment, the second damper spring may include a second leg having a bow providing a terminal end that may extend radially outward toward the outer case.

In another further embodiment of the foregoing stator assembly embodiment, the second damper spring may include notches respectively providing fingers with each finger circumferentially aligned with a stator.

In a further embodiment of the foregoing stator assembly embodiment, at least one of the stators may include an anti-rotation feature. The second damper spring may include a tab extending into the recess and cooperating with the anti-rotation feature to circumferentially align the fingers relative to the stators.

In another further embodiment of the foregoing stator assembly embodiment, the second attachment liner may include a biasing portion arranged axially between the stators and the outer case to bias the stators axially relative to the outer case.

In another further embodiment of the foregoing stator assembly embodiment, a blade outer air seal may be secured to the outer case. The first and second channels may be provided by at least one of the blade outer air seal and the outer case. The first and second attachment liners respectively may be received in the first and second channels.

In another further embodiment of the foregoing stator assembly embodiment, the stator vane may include radially inwardly extending air foils providing a tip at an inner diameter that may be structurally unsupported relative to adjacent tips.

In accordance with a second aspect, the present invention provides a method of manufacturing a stator assembly as claimed in claim 13.

### BRIEF DESCRIPTION OF THE DRAWINGS

The disclosure can be further understood by reference to the following detailed description when considered in connection with the accompanying drawings wherein:
Figure 1 is a cross-sectional schematic view of a gas turbine engine.
Figure 2 is a broken, cross-sectional perspective view of a portion of a stator assembly that falls outside the wording of the claims.
Figure 3 is a perspective view of one example damper spring shown in the stator assembly of Figure 2.
Figure 4 is an enlarged top elevational view of the damper spring arranged within one stator segment of the stator assembly of Figure 2.
Figure 5 is a cross-sectional view of the stator assembly illustrated in Figure 2 with the damper spring illustrated in an uncompressed state.
Figure 6 is a cross-sectional view of another example damper spring that falls outside the wording of the claims.
Figure 7 is a cross-sectional view of a stator assembly with an integrated attachment liner and damper spring.
Figure 8 is a perspective view of two stator subassemblies having the integrated attachment liner and damper spring shown in Figure 7.

### DETAILED DESCRIPTION

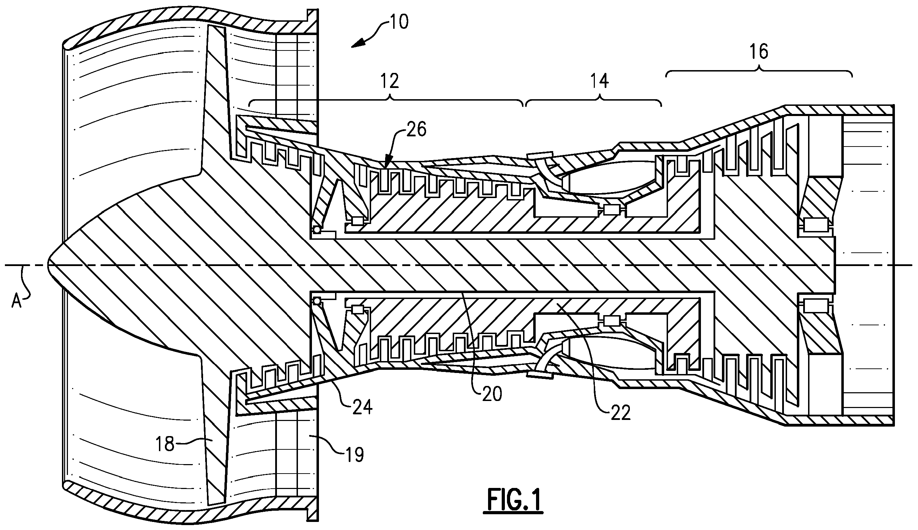

An example gas turbine engine 10 is schematically illustrated in Figure 1. Although a high bypass (e.g., a bypass ratio of greater than about ten (10)) engine is illustrated, it should be understood that the disclosure also relates to other types of gas turbine engines, such as turbo jets.

The gas turbine engine 10 includes a compressor section 12, a combustor section 14 and a turbine section 16, which are arranged within a housing 24. In the example illustrated, high pressure stages of the compressor section 12 and the turbine section 16 are mounted on a first shaft 20, which is rotatable about an axis A. Low pressure stages of the compressor section 12 and turbine section 16 are mounted on a second shaft 22 which is coaxial with the first shaft 20 and rotatable about the axis A. In the example illustrated, the first shaft 20 rotationally drives a fan 18 that provides flow through a bypass flow path 19. The gas turbine engine 10 may include a geartrain (not shown) for controlling the speed of the rotating fan 18. More specifically, the geartrain may enable (e.g., using a gear reduction ratio of greater than about 2.4) a reduction of the speed of the fan 18 relative to the low compressor. The geartrain can be any known gear system, such as a planetary gear system with orbiting planet gears, a planetary system with non-orbiting planet gears or other type of gear system. The low speed second shaft 22 may drive the geartrain and the low pressure compressor. It should be understood that the configuration illustrated in Figure 1 is exemplary only, and the disclosure may be used in other configurations.

The first and second shafts 20, 22 are supported for rotation within the housing 24. The housing 24 is typically constructed of multiple components to facilitate assembly.

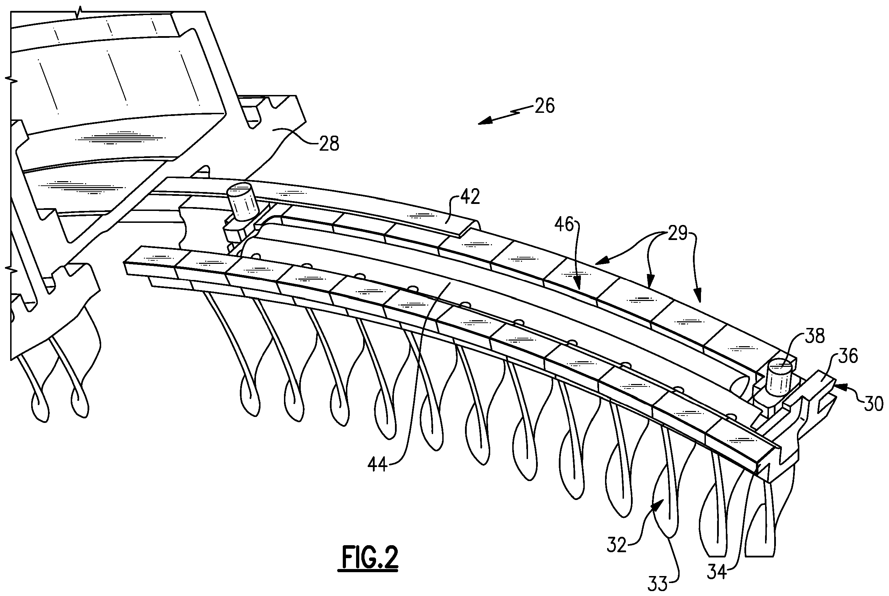

A stator assembly 26 that falls outside the wording of the claims is illustrated in Figures 2-5. The stator assembly 26 includes an outer case 28 that supports multiple stators 29, or stator segments, circumferentially arranged in an array. The stators 29 include an outer band 30, or shroud, that is supported by the outer case 28. An airfoil 32 extends from the outer band 30 to a tip 33, which is structurally unsupported in the example shown. This type of stator configuration is more susceptible to vibrations due to the unsupported airfoils 32 at the inner diameter of the stator assembly 26.

Each stator 29 includes first and second hooks 34, 36 that are received in corresponding first and second channels 35, 37. The channels 35, 37 may be provided in at least one of a blade outer air seal 86, the outer case 28, or both. Locating features 38 (Figure 2) may be provided on one or more of the stators 29 to circumferentially locate the stator array relative to the outer case 28. The locating features 38 may be integral with or discrete from the stators 29.

First and second attachment liners 40, 42 are respectively secured to the first and second hooks 34, 36. The attachment liners 40, 42 join groups of stators 29 into subassemblies and provide a wearable structure between the outer shroud 30 and the outer case 28.

The stators 29 include a recess 46 that receives an arcuate damper spring 44. In the embodiments shown in Figures 2-6, the damper spring 44 is discrete from the attachment liners 40, 42. The damper spring 44 extends circumferentially to provide spring arcuate segments that cooperate with multiple stators 29 arranged in a subassembly. That is, a single damper spring engages at least several stators 29, biasing the array radially inward from the outer case 28. The recess 46 includes lateral walls 48, which are parallel to one another in the example, adjoining a bottom wall 50. When the stator assembly 26 is fully assembled, the damper spring 44 engages the outer case 28, the lateral wall(s) 48 and the bottom wall 50 to stabilize the stators 29 as well as to damp vibrations.

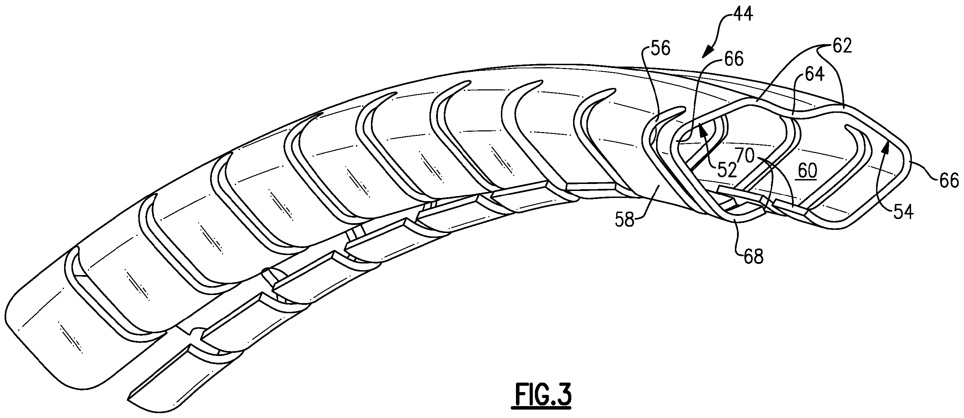

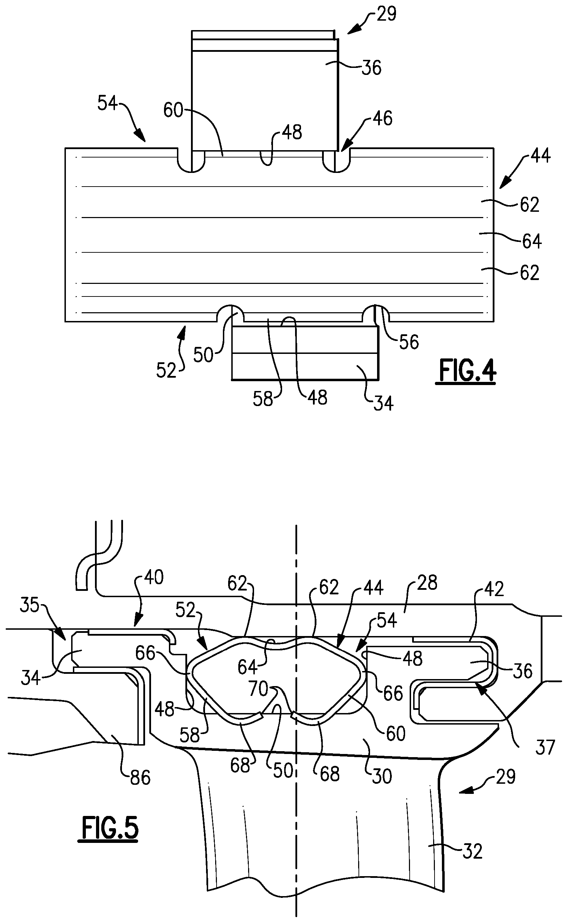

Referring to Figures 3-5, the damper spring 44 includes symmetrically shaped first and second sides 52, 54 that provide a generally W-shaped structure. Asymmetrically oriented notches 56 are provided in the first and second sides 52, 54 to respectively provide first and second fingers 58, 60. The first fingers 58 are offset circumferentially relative to the second fingers 60, to align with and engage the first and second hooks 34, 36, which are circumferentially offset from one another, as best shown in Figure 4. A pair of fingers 58, 60 engages each stator in the example shown.

A portion of the damper spring 44 arranged at an outer circumference includes peaks 62 providing a centrally located valley 64. Each of first and second sides 52, 54 includes a lateral bend 66 and a foot 68 extending to a terminal end 70. The feet 68 are arranged at an inner circumference of the damper spring 44. The peaks 62 engage the outer case 28 and the lateral bends 66 engage the lateral walls 48 to stabilize the stators 29. The damper spring 44 is shown in an uncompressed state in Figure 5. In a compressed state, the feet 68 engage the bottom wall 50 and bias the stator 29 radially inward from the outer case 28. The terminal ends 70 are spaced from one another to permit compression of the first and second fingers 58, 60 during assembly.

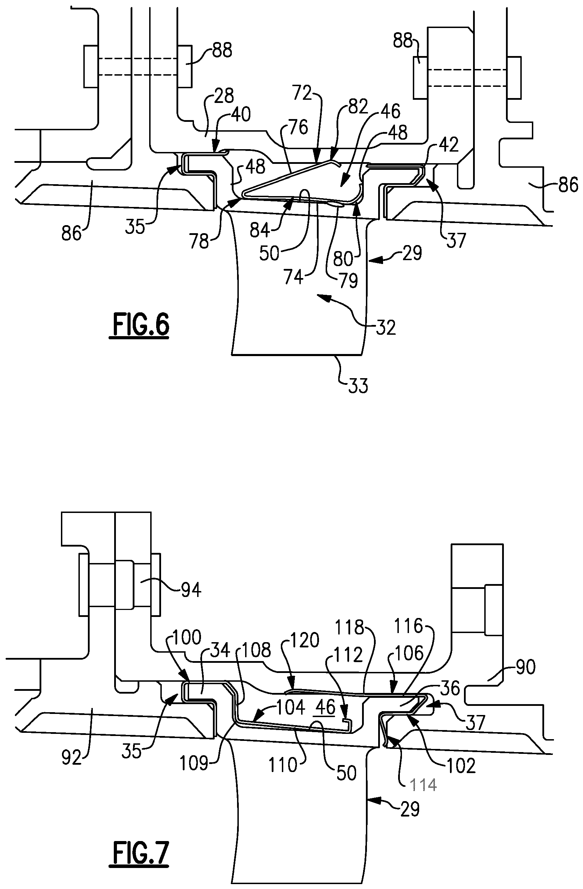

Referring to Figure 6, another damper spring 72 that falls outside the wording of the claims is illustrated. Like numerals are used to indicate like elements between figures. The damper spring 72 is an arcuate segment that engages multiple stators 29 and is arranged in the recess 46. The damper spring 72 provides a generally V-shaped annular structure. The damper spring 72 includes first and second legs 74, 76 joined at a first bend 78 that provides an acute angle between the first and second leg 74, 76. A second bend 80 is provided on the first leg 74 and abuts one of the lateral walls 48. A third bend 82 is provided by the second leg 76 at an outer circumference opposite the first and second bends 78, 80 and abuts the outer case 28. The first leg 74 includes a bow 84 arranged at an inner circumference, which provides two contact points (the first and second bends 78, 80) with the bottom wall 50, providing stator stability. Adhesive 79, for example, wax or hot-melt glue, may be used to secure the damper spring 72 temporarily to the stators 29 during assembly.

One or more blade outer air seals 86 may be secured to the outer case 28 by fasteners 88, as shown in Figure 6. The first and second channels 35, 37 are provided by the outer case 28 and/or one or more blade outer air seals 86.

In one example, a method of manufacturing the stator assembly 26 includes positioning stator vanes 29 relative to one another to provide a circumferential array of stator vanes 29. In one example, the positioning step includes aligning the hooks 34, 36 relative to one another. One or more attachment liners 40, 42 are installed onto stator vane hooks 34, 36 to provide a subassembly of stator vanes 29. In one example, the installing step includes sliding the attachment liners 40, 42 over the hooks 34, 36. A damper spring 44/72 is arranged between the subassembly and the outer case 28. The subassembly is mounted onto the outer case 28 and biases the subassembly radially inward with the damper spring 44/72.

In the arrangement shown in Figures 2 and 5, the outer case 28 and one of the blade outer air seals are integrated with one another. This integrated structure provides the second channel 37, best shown in Figure 5. In such a configuration, the mounting step includes sliding the second hook 36 into the second channel 37. The arrangement shown in Figure 6 includes a configuration in which the blade outer air seal 86 is fastened to the outer case 28. For this type of configuration, the subassembly is positioned within the channels 35/37 and held between the blade outer air seal 86 and the outer case 28.

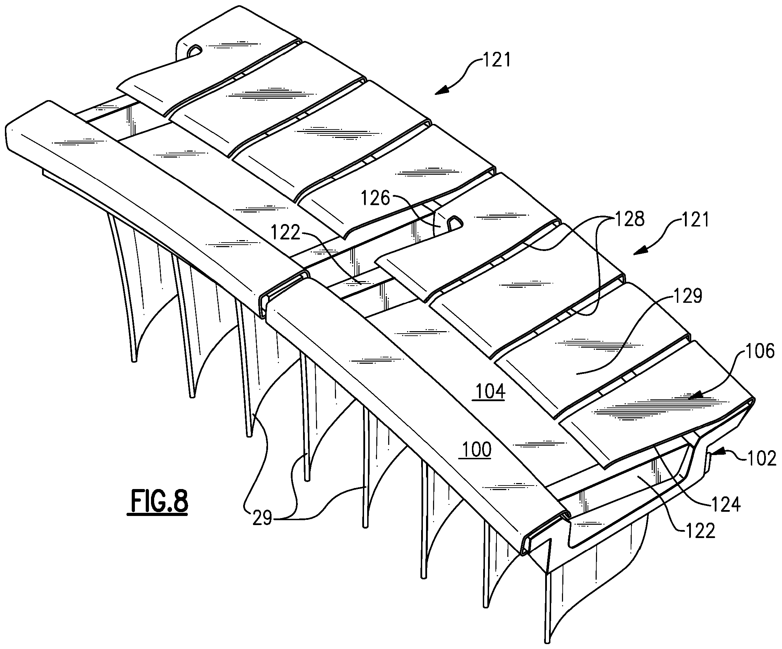

Referring to Figures 7 and 8, an integrated outer case and blade outer air seal 90 provides the second channel 37. Like numerals are used to indicate like elements between figures. A blade outer air seal 92 is secured to this integrated structure by fasteners 94 to provide the first channel 35. First and second attachment liners 100, 102 are secured to and wrap about the first and second hooks 34, 36. First and second damper springs 104, 106 are respectively integrated with the first and second attachment liners 100, 102. That is, each attachment liner and its corresponding damper spring are provided by a single, unitary structure that is integrally formed from a common sheet of metal, for example.

The first attachment liner 100 is generally arcuate and S-shaped and includes a first wall 108. A first leg 110 extends from the first wall 108 at a bend 109 to provide the first damper spring 104. The first leg 110 engages the bottom wall 50 of the recess 46 and is spaced from the outer case. The first leg 110 terminates in a hook 112, which may be used during assembly to position the stator vanes 29 relative to the first damper spring 104.

The second attachment liner 102 is generally arcuate and S-shaped and includes an axial biasing portion 114 arranged between the stator 29 and the integrated outer case and blade outer air seal 90. The second attachment liner 102 also includes a leg 116 providing a bow 118 extending to a terminal end 120. The leg 116 engages the outer case and is spaced from the bottom wall 50 of the recess 46.

Several stators 29 are circumferentially arranged to provide a subassembly 121, as shown in Figure 8. One or more of the stators 29 include integrated anti-rotation features 122. The second damper spring 106 includes a tapered edge 124 that aligns with the anti-rotation feature 122. A tab 126 extending into the recess 46 and provided by the second damper spring 106 circumferentially locates the second attachment liner 102 in a desired position relative to the stators 29. Notches 128 are provided in the second damper spring 106 to provide fingers 129 aligned with each stator 29. The first damper spring 104 has a width sized to fit between the anti-rotation features 122 and is less than the width of the first attachment liner 100. Assembly is similar to that described with respect to Figures 2-6.

Although an example embodiment has been disclosed, a worker of ordinary skill in this art would recognize that certain modifications would come within the scope of the claims. For that reason, the following claims should be studied to determine their true scope and content.

## Claims

1. A stator assembly (26) for a gas turbine engine comprising:
an outer case (28);
a stator subassembly (121) including an array of circumferentially arranged stator vanes (29), each of the stator vanes (29) having a hook (34, 36), with the hooks (34, 36) of the stator vanes (29) aligned with one another; and
an attachment liner (100, 102) securing the hooks (34, 36) to one another, **characterized in that**:
the attachment liner (100, 102) includes a damper spring (104, 106) integral with the attachment liner (100, 102) and provided between the array of stator vanes (29) and the outer case (28), the damper spring (104, 106) being configured to bias the array of stator vanes (29) radially inward from the outer case (28).

2. The stator assembly (26) according to claim 1, wherein at least one of the stator vanes (29) includes first and second hooks (34, 36), the first and second attachment liners (100, 102) are respectively secured to the first and second hooks (34, 36) to provide the stator subassembly (121) and the first and second attachment liners (100, 102) respectively have integral first and second damper springs (104, 106).

3. The stator assembly (26) according to claim 2, wherein at least one of the stator vanes (29) includes a recess (46) having a bottom wall (50), and the first damper spring (104) engages the bottom wall (50) and is spaced from the outer case (28).

4. The stator assembly (26) according to claim 3, wherein the first damper spring (104) includes a first leg (110) engaging the bottom wall (50), and a hook (112) at a terminal end of the first leg (110) opposite the first attachment liner (100).

5. The stator assembly (26) according to claim 4, wherein at least one of the stator vanes (29) includes an anti-rotation feature (122), the first leg (110) is arranged circumferentially adjacent to the anti-rotation feature (122) and the first leg (110) has a circumferential width that is less than the circumferential width of the first attachment liner (100).

6. The stator assembly (26) according to any of claims 2 to 5, wherein the second damper spring (106) engages the outer case (28) and is spaced from a bottom wall (50) of the recess (46).

7. The stator assembly (26) according to claim 6, wherein the second damper spring (106) includes a second leg (116) having a bow (118) providing a terminal end (120) extending radially outward toward the outer case (28).

8. The stator assembly (26) according to claim 6 or 7, wherein the second damper spring (106) includes notches (128) respectively providing fingers (129), each finger (129) circumferentially aligned with a stator vane (29).

9. The stator assembly (26) according to claim 8, wherein at least one of the stator vane (29) includes an anti-rotation feature (122) and the second damper spring (106) includes a tab (126) extending into the recess (46) and cooperating with the anti-rotation feature (122) to circumferentially align the fingers (129) relative to the stators vanes (29).

10. The stator assembly (26) according to any of claims 2 to 9, wherein the second attachment liner (102) includes a biasing portion (114) arranged axially between the stator vanes (29) and the outer case (28) biasing the stator vane (29) axially relative to the outer case (28).

11. The stator assembly (26) according to any of claims 2 to 10, comprising a blade outer air seal (92) secured to the outer case (28), and first and second channels (35, 37) provided by at least one of the blade outer air seal (92) and the outer case (28), the first and second attachment liners (100, 102) respectively received in the first and second channels (35, 37).

12. The stator assembly (26) according to any preceding claim, wherein the stator vanes (29) include radially inwardly extending airfoils (32) providing a tip (33) at an inner diameter that is structurally unsupported relative to adjacent tips (33).

13. A method of manufacturing a stator assembly (26) for a gas turbine engine comprising the steps of:
positioning stator vanes (29) relative to one another to provide a circumferential array of stator vanes (29);
installing an attachment liner (100, 102) together with an integral damper spring (104, 106) onto stator vane hooks (34, 36) to provide a subassembly (121) of stator vanes (29); and
mounting the subassembly (121) onto the outer case (28) with the damper spring (104, 106) arranged between the subassembly (121) and an outer case (28), and biasing the subassembly (121) radially inward with the damper spring (104, 106).

## Patentansprüche

1. Statorbaugruppe (26) für ein Gasturbinentriebwerk, umfassend:
ein Außengehäuse (28);
eine Statorunterbaugruppe (121), die eine Anordnung von in Umfangsrichtung angeordneten Statorleitschaufeln (29) beinhaltet, wobei jede der Statorleitschaufeln (29) einen Haken (34, 36) aufweist, wobei die Haken (34, 36) der Statorleitschaufeln (29) aufeinander ausgerichtet sind; und
eine Befestigungsauskleidung (100, 102), die die Haken (34, 36) aneinander fixiert, **dadurch gekennzeichnet, dass**:
die Befestigungsauskleidung (100, 102) eine Dämpfungsfeder (104, 106), die mit der Befestigungsauskleidung (100, 102) integriert ist und zwischen der Anordnung von Statorleitschaufeln (29) und dem Außengehäuse (28) bereitgestellt ist, beinhaltet, wobei die Dämpfungsfeder (104, 106) so konfiguriert ist, dass sie die Anordnung von Statorleitschaufeln (29) vom Außengehäuse (28) radial nach innen vorspannt.

2. Statorbaugruppe (26) nach Anspruch 1, wobei mindestens eine der Statorleitschaufeln (29) einen ersten und einen zweiten Haken (34, 36) beinhaltet, wobei die erste und die zweite Befestigungsauskleidung (100, 102) an dem ersten beziehungsweise an dem zweiten Haken (34, 36) fixiert sind, um die Statorunterbaugruppe (121) bereitzustellen, und wobei die erste und die zweite Befestigungsauskleidung (100, 102) eine integrierte erste beziehungsweise zweite Dämpfungsfeder (104, 106) aufweisen.

3. Statorbaugruppe (26) nach Anspruch 2, wobei mindestens eine der Statorleitschaufeln (29) eine Aussparung (46) beinhaltet, die eine Bodenwand (50) aufweist, und die erste Dämpfungsfeder (104) in die Bodenwand (50) eingreift und von dem Außengehäuse (28) beabstandet ist.

4. Statorbaugruppe (26) nach Anspruch 3, wobei die erste Dämpfungsfeder (104) einen ersten Schenkel (110), der die Bodenwand (50) in Eingriff nimmt, und einen Haken (112) an einem terminalen Ende des ersten Schenkels (110) gegenüber der ersten Befestigungsauskleidung (100) beinhaltet.

5. Statorbaugruppe (26) nach Anspruch 4, wobei mindestens eine der Statorleitschaufeln (29) ein Drehsicherungsmerkmal (122) beinhaltet, der erste Schenkel (110) in Umfangsrichtung angrenzend an das Drehsicherungsmerkmal (122) angeordnet ist und der erste Schenkel (110) eine Umfangsbreite aufweist, die kleiner als die Umfangsbreite der ersten Befestigungsauskleidung (100) ist.

6. Statorbaugruppe (26) nach einem der Ansprüche 2 bis 5, wobei die zweite Dämpfungsfeder (106) das Außengehäuse (28) in Eingriff nimmt und von einer Bodenwand (50) der Aussparung (46) beabstandet ist.

7. Statorbaugruppe (26) nach Anspruch 6, wobei die zweite Dämpfungsfeder (106) einen zweiten Schenkel (116) beinhaltet, der einen Bügel (118) aufweist, der ein terminales Ende (120) bereitstellt, das sich zum Außengehäuse (28) radial nach außen erstreckt.

8. Statorbaugruppe (26) nach Anspruch 6 oder 7, wobei die zweite Dämpfungsfeder (106) Kerben (128) beinhaltet, die jeweils Finger (129) bereitstellen, wobei jeder Finger (129) in Umfangsrichtung auf eine Statorleitschaufel (29) ausgerichtet ist.

9. Statorbaugruppe (26) nach Anspruch 8, wobei mindestens eine der Statorleitschaufel (29) ein Drehsicherungsmerkmal (122) beinhaltet und die zweite Dämpfungsfeder (106) eine Lasche (126) beinhaltet, die sich in die Aussparung (46) erstreckt und mit dem Drehsicherungsmerkmal (122) zusammenwirkt, um die Finger (129) in Umfangsrichtung relativ zu den Statorenleitschaufeln (29) auszurichten.

10. Statorbaugruppe (26) nach einem der Ansprüche 2 bis 9, wobei die zweite Befestigungsauskleidung (102) einen Vorspannabschnitt (114) beinhaltet, der axial zwischen den Statorleitschaufeln (29) und dem Außengehäuse (28) angeordnet ist und die Statorleitschaufel (29) axial relativ zum Außengehäuse (28) vorspannt.

11. Statorbaugruppe (26) nach einem der Ansprüche 2 bis 10, eine äußere Laufschaufelluftdichtung (92), die am Außengehäuse (28) fixiert ist, und einen ersten und einen zweiten Kanal (35, 37) umfassend, die durch mindestens eines aus der äußeren Laufschaufelluftdichtung (92) und dem Außengehäuse (28) bereitgestellt werden, wobei die erste und die zweite Befestigungsauskleidung (100, 102) in dem ersten beziehungsweise in dem zweiten Kanal (35, 37) aufgenommen sind.

12. Statorbaugruppe (26) nach einem der vorstehenden Ansprüche, wobei die Statorleitschaufeln (29) sich radial einwärts erstreckende Schaufelprofile (32) beinhalten, die eine Spitze (33) an einem Innendurchmesser bereitstellen, die relativ zu angrenzenden Spitzen (33) strukturell ungestützt ist.

13. Verfahren zum Herstellen einer Statorbaugruppe (26) für ein Gasturbinentriebwerk, die folgenden Schritte umfassend:
Positionieren von Statorleitschaufeln (29) relativ zueinander, um eine Umfangsanordnung von Statorleitschaufeln (29) bereitzustellen;
Einbauen einer Befestigungsauskleidung (100, 102) zusammen mit einer integrierten Dämpfungsfeder (104, 106) auf Statorleitschaufelhaken (34, 36), um eine Unterbaugruppe (121) von Statorleitschaufeln (29) bereitzustellen; und
Montieren der Unterbaugruppe (121) auf das Außengehäuse (28), wobei die Dämpfungsfeder (104, 106) zwischen der Unterbaugruppe (121) und einem Außengehäuse (28) angeordnet ist, und Vorspannen der Unterbaugruppe (121) radial einwärts mit der Dämpfungsfeder (104, 106).

## Revendications

1. Ensemble de stator (26) pour un moteur à turbine à gaz comprenant :
un boîtier externe (28) ;
un sous-ensemble de stator (121) comportant un réseau d'aubes de stator disposées circonférentiellement (29), chacune des aubes de stator (29) ayant un crochet (34, 36), les crochets (34, 36) des aubes de stator (29) étant alignés les uns avec les autres ; et
une garniture de fixation (100, 102) fixant les crochets (34, 36) les uns aux autres, **caractérisé en ce que** :
la garniture de fixation (100, 102) comporte un ressort amortisseur (104, 106) intégré à la garniture de fixation (100, 102) et prévu entre le réseau d'aubes de stator (29) et le boîtier externe (28), le ressort amortisseur (104, 106) étant configuré pour solliciter le réseau d'aubes de stator (29) radialement vers l'intérieur à partir du boîtier externe (28).

2. Ensemble de stator (26) selon la revendication 1, dans lequel au moins une des aubes de stator (29) comporte des premier et second crochets (34, 36), les première et seconde garnitures de fixation (100, 102) sont respectivement fixées au premier et second crochets (34, 36) pour fournir le sous-ensemble de stator (121) et les première et seconde garnitures de fixation (100, 102) ont respectivement des premier et second ressorts amortisseurs intégrés (104, 106).

3. Ensemble de stator (26) selon la revendication 2, dans lequel au moins une des aubes de stator (29) comporte un évidement (46) ayant une paroi inférieure (50), et le premier ressort amortisseur (104) vient en prise avec la paroi inférieure (50) et est espacé du boîtier externe (28).

4. Ensemble de stator (26) selon la revendication 3, dans lequel le premier ressort amortisseur (104) comporte une première jambe (110) venant en prise avec la paroi inférieure (50), et un crochet (112) à une extrémité terminale de la première jambe (110) en face de la première garniture de fixation (100) .

5. Ensemble de stator (26) selon la revendication 4, dans lequel au moins une des aubes de stator (29) comporte un élément anti-rotation (122), la première jambe (110) est disposée circonférentiellement adjacente à l'élément anti-rotation (122) et la première jambe (110) a une largeur circonférentielle qui est inférieure à la largeur circonférentielle de la première garniture de fixation (100).

6. Ensemble de stator (26) selon l'une quelconque des revendications 2 à 5, dans lequel le second ressort amortisseur (106) vient en prise avec le boîtier externe (28) et est espacé d'une paroi inférieure (50) de l'évidement (46).

7. Ensemble de stator (26) selon la revendication 6, dans lequel le second ressort amortisseur (106) comporte une seconde jambe (116) ayant un arc (118) fournissant une extrémité terminale (120) s'étendant radialement vers l'extérieur vers le boîtier externe (28).

8. Ensemble de stator (26) selon la revendication 6 ou 7, dans lequel le second ressort amortisseur (106) comporte des encoches (128) fournissant respectivement des doigts (129), chaque doigt (129) étant aligné circonférentiellement avec une aube de stator (29) .

9. Ensemble de stator (26) selon la revendication 8, dans lequel au moins une de l'aube de stator (29) comporte un élément anti-rotation (122) et le second ressort amortisseur (106) comporte une patte (126) s'étendant dans l'évidement (46) et coopérant avec l'élément anti-rotation (122) pour aligner circonférentiellement les doigts (129) par rapport aux aubes de stators (29).

10. Ensemble de stator (26) selon l'une quelconque des revendications 2 à 9, dans lequel la seconde garniture de fixation (102) comporte une partie de sollicitation (114) disposée axialement entre les aubes de stator (29) et le boîtier externe (28) sollicitant l'aube de stator (29) axialement par rapport au boîtier externe (28).

11. Ensemble de stator (26) selon l'une quelconque des revendications 2 à 10, comprenant un joint à air extérieur de pale (92) fixé au boîtier externe (28), et des premier et second canaux (35, 37) fournis par au moins l'un parmi le joint à air extérieur de pale (92) et le boîtier externe (28), les première et seconde garnitures de fixation (100, 102) étant respectivement reçues dans les premier et second canaux (35, 37) .

12. Ensemble de stator (26) selon une quelconque revendication précédente, dans lequel les aubes de stator (29) comportent des profils aérodynamiques (32) s'étendant radialement vers l'intérieur fournissant une pointe (33) à un diamètre intérieur qui est structurellement non supportée par rapport aux pointes adjacentes (33).

13. Procédé de fabrication d'un ensemble de stator (26) pour un moteur à turbine à gaz comprenant les étapes de positionnement d'aubes de stator (29) les unes par rapport aux autres pour fournir un réseau circonférentiel d'aubes de stator (29) ;
d'installation d'une garniture de fixation (100, 102) avec un ressort amortisseur intégré (104, 106) sur des crochets d'aube de stator (34, 36) pour fournir un sous-ensemble (121) d'aubes de stator (29) ; et
de montage du sous-ensemble (121) sur le boîtier externe (28) avec le ressort d'amortisseur (104, 106) disposé entre le sous-ensemble (121) et un boîtier externe (28), et de sollicitation du sous-ensemble (121) radialement vers l'intérieur avec le ressort d'amortisseur (104, 106).
